# FASCICULE DE BREVET EUROPEEN

(11) **EP 1 072 041 B1**
(45) Date de publication et mention de la délivrance du brevet: **19.03.2003**
(21) Numéro de dépôt: 99913418.2
(22) Date de dépôt: 15.04.1999
(51) Int. Cl.: G21B 1/00

(54) **PROCEDE ET DISPOSITIF POUR LA PRODUCTION D'ENERGIE A PARTIR D'UN HYDRURE A CARACTERE METALLIQUE**
VERFAHREN UND VORRICHTUNG ZUR ENERGIEERZEUGUNG, AUSGEHEND VON EINEM METALLHYDRID
METHOD AND DEVICE FOR PRODUCING ENERGY FROM A METAL TYPE HYDRIDE

(30) Priorité: 17.04.1998 FR 9804846
(43) Date de publication de la demande: 31.01.2001
(73) Titulaire: CONSERVATOIRE NATIONAL DES ARTS ET METIERS, F-75003 Paris (FR)
(72) Inventeur: DUFOUR, Jacques, Julien, Jean, F-75014 Paris (FR); DUFOUR, Xavier, Jean-Claude, Marie, F-75012 Paris (FR); FOOS, Jacques, Henri, F-91400 Orsay (FR); MURAT, Denis, Marie, Louis, F-75003 Paris (FR)
(74) Mandataire: Schrimpf, Robert
(86) Numéro de dépôt international: FR9900886
(87) Numéro de publication internationale: WO99054884

(56) Documents cités:
- EP-A- 0 116 656
- EP-A- 0 645 777
- WO-A-90/13129
- WO-A-90/15415
- WO-A-90/15416
- WO-A-91/06959
- US-A- 5 729 580

## Description

L'invention concerne la production d'énergie et la réalisation de réactions nucléaires exothermiques.

On a proposé de produire de l'énergie à partir d'un hydrure à caractère métallique, c'est à dire ayant la conductibilité d'un métal.

Les hydrures à caractère métallique sont un domaine très bien connu de la Science et de la Technologie. On se référera par exemple à l'ouvrage "Comprehensive Inorganic Chemistry" publié chez Pergamon Press en 1975 et plus particulièrement aux pages 38 à 61 du Tome 1 où sont décrits ces hydrures ainsi que leurs principales propriétés. On se référera également aux ouvrages "Topics in Applied Physics" Volume 28, "Hydrogen in Metals I - Basic Properties" et "Topics in Applied Physics" Volume 29, "Hydrogen in Metals II - Application-Oriented Properties", publiés chez Springer-Verlag en 1978, et où sont exposés plus en détail les propriétés de certains de ces hydrures métalliques ainsi que les théories pouvant les expliquer.

Ces hydrures peuvent être produits, de façon en soi connue, par exemple en soumettant un métal susceptible de fournir l'hydrure à une atmosphère d'hydrogène, dans des conditions de pression et de température appropriées, par exemple une température de 100 à 400°C et une pression de 5 à 50 bars.

Selon la nature du métal, l'hydrure se conserve sans précautions particulières ou doit être maintenu dans une atmosphère non oxydante, par exemple en présence d'un gaz neutre.

Le mot hydrogène (H2) désigne l'hydrogène ainsi que ses isotopes, notamment le deutérium (D2) et le tritium. De préférence, on utilise un gaz qui ne contient que de l'hydrogène et sous pression élevée.

Le métal susceptible de former un hydrure à caractère métallique est un métal de l'un des groupes IIIa, IVa, Va, VIa, VIIa et VIII de la classification périodique des éléments. De préférence, on choisit un métal du groupe constitué par les éléments de transition (Fe, Co, Ni...), les Lanthanides et les Actinides, notamment le palladium (Pd), le titane, (Ti), le nickel (Ni) et le lanthane (La), l'uranium (U), le thorium (Th) et le plutonium (Pu). Le choix du métal est en fait guidé par le résultat visé.

De l'étude des ouvrages cités, il ressort qu'il est communément admis qu'une partie importante de l'hydrogène présent dans l'hydrure à caractère métallique s'y trouve sous forme de protons localisés dans les sites interstitiels du réseau du métal hôte : le réseau métallique peut donc être considéré comme confinant un ensemble de protons et d'électrons, que l'on appellera par la suite « plasma ».

On a proposé de faire agir un champ magnétique sur un électrolyte (WO 90/15416 ; WO 91/06959) ou sur une phase gazeuse (US 5 729 580), dans un dispositif de production d'énergie par fusion froide pour obtenir certains résultats.

On a également proposé (EP.A.0645777) dans un dispositif de fusion nucléaire froide, de soumettre une électrode allongée dans laquelle est confinée une substance pour fusion nucléaire à l'action d'un champ magnétique longitudinal pour élever la densité des électrons dans une zone de l'électrode.

On a maintenant découvert, selon la présente invention, qu'il était avantageux de combiner au sein de l'hydrure métallique l'action d'un champ magnétique avec un mouvement d'ensemble des protons et des électrons du plasma dans une direction parallèle à celle du champ magnétique, favorisant ainsi la production d'énergie que l'on recherche.

Dans l'état actuel de la technique, trois moyens peuvent être utilisés, séparément ou conjointement, pour créer le mouvement d'ensemble du plasma: création d'un gradient de température, d'un gradient de concentration en hydrogène ou d'un gradient de tension électrique à travers le plasma d'hydrogène confiné, selon des directions parallèles à celle du champ magnétique.

Le champ électrique peut être généré par une basse tension de l'ordre de quelques dizaines de volts, ce qui reste beaucoup plus simple que la mise en oeuvre d'étincelles sous haute tension qui a été préconise dans des travaux antérieurs relatifs à la «fusion froide».

On utilise de préférence un champ magnétique dont l'intensité est au moins 1000 fois celle du champ magnétique environnant, sans que cette valeur puisse être considérée comme une limite inférieure critique.

La valeur du champ magnétique est avantageusement aussi élevée que possible, dans les limites des contraintes économiques.

Le champ magnétique a été créé par des aimants permanents ou par un solenoide.

L'invention a donc pour objets un procédé tel que défini dans la revendication 1 et un dispositif tel que defini dans la revendication 8.

On pense que dans les conditions de l'invention, l'atome métastable d'hydrogène (qui sera appelé «Hydrex» dans la suite du texte et «Deutex» si l'isotope d'hydrogène utilisé est le «Deutérium») se formerait sans émission de photons et aurait les propriétés suivantes : très petite taille (5 à 10⁻¹⁵m), moment électrique et moment magnétique permanents, durée de vie de l'ordre de quelques dizaines à quelques milliers de secondes. La formation de l'atome metastable d'hydrogène aurait lieu à l'occasion des collisions entre protons et électrons contenus dans l'hydrure quand leurs spins ont une direction parallèle.

On conçoit alors que le fait de créer un mouvement d'ensemble de ces particules dont la direction soit parallèle à celle d'un champ magnétique appliqué à l'hydrure (et qui a pour effet d'orienter les spins) puisse considérablement augmenter le rythme de formation de l'atome meta stable.

La très petite taille de l'atome à l'état métastable et son moment électrique permanent permettraient à cet atome de venir à très courte distance d'un noyau et de favoriser, par abaissement de la barrière de potentiel coulombien, certaines réactions nucléaires, que l'on peut définir comme des réactions soit d'émission alpha assistée, soit de capture de nucléons par l'Hydrex, quand celles-ci sont énergétiquement possibles.

Un premier avantage de la présence invention est qu'elle fournit un moyen simple, économique et sans risque pour transmuter certains noyaux, particulièrement les noyaux des actinides, en noyaux de masse atomique plus faible. On sait que la production (dans les réacteurs nucléaires générant de l'énergie par fission de l'uranium), d'actinides lourds à vie longue comme certains isotopes du plutonium, est un sérieux frein au développement de cette forme d'énergie du fait des problèmes posés par leur gestion à long terme. La présente invention donne un moyen de transformer ces déchets à vie longue en déchets à vie beaucoup plus courte ou même stables, permettant une solution efficace au problème de leur gestion.

Un deuxième avantage de la présente invention est qu'elle permet d'agrandir considérablement la liste des combustibles nucléaires, en donnant la possibilité de produire de l'énergie par des réactions nucléaires d'émission alpha assistée ou de capture de nucléons par l'Hydrex. De plus les réacteurs fonctionnant sur le principe de l'invention, sont plus simples, plus faciles à exploiter et présentent moins de risques que les réacteurs à fission.

Un troisième avantage de l'invention est qu'elle permet de valoriser les sources de chaleur à bas niveau de température. On sait que de telles sources existent en abondance.

L'invention a permis de mettre en évidence une nouvelle classe de réactions nucléaires, que l'on peut qualifier, de façon générale, soit de réactions nucléaires catalysées (émission alpha assistée), soit de réactions de capture de nucléons par l'Hydrex.

Un premier type de ces réactions est observé avec les noyaux très lourds, les actinides par exemple, et plus généralement tous les noyaux qui seraient des émetteurs alpha si leur barrière coulombienne ne les en empêchait. L'Hydrex, à proximité nucléaire de ces noyaux abaisse localement cette barrière et augmente leur taux d'émission alpha.

Un second type de ces réactions est observé avec les actinides: l'Hydrex capture deux protons et quatre neutrons d'un noyau de masse atomique A et de numéro atomique Z pour donner du lithium 7, tandis que le noyau très lourd devient un noyau de masse atomique A-6 et de numéro atomique Z-2. C'est ainsi que l'uranium 238 peut être transmuté en thorium 232.

Un troisième type de réaction est observé avec les noyaux de masse faible (lithium et béryllium). Le Deutex capture un neutron d'un noyau de béryllium 9, pour donner un noyau de tritium tandis que le noyau de béryllium 9 se transforme en béryllium 8 qui donne instantanément deux noyaux d'hélium 4.

Il est clair que ces réactions sont données à titre d'exemple. De nombreuses autres réactions sont possibles quand elles sont exothermiques. Les taux de réactions observées dépendront, entre autres, des moments magnétiques nucléaires des noyaux partenaires de l'Hydrex ainsi que des propriétés de spin des produits de la réaction.

L'invention a mis également en évidence l'émission de photons dans la gamme lumineuse quand l'état métastable de l'hydrogène se désactive pour revenir à la forme habituelle de l'hydrogène. Ceci ouvre la possibilité de valoriser les sources d'énergie à bas niveau de température en produisant de l'électricité par le biais d'une cellule photovoltaïque.

Un dispositif pour la mise en oeuvre du procédé de l'invention comprend essentiellement un réacteur, des moyens pour supporter dans le réacteur un hydrure à caractère métallique confinant un plasma de protons et d'électrons confiné, des moyens pour exposer ce plasma à un champ magnétique et des moyens pour créer un mouvement d'ensemble des protons et des électrons du plasma selon une direction parallèle à celle du champ magnétique.

Le dispositif peut également comprendre des moyens pour extraire l'énergie du réacteur.

Par exemple, le réacteur est équipé de cellules photovoltaïques capable de transformer en électricité le rayonnement émis comme conséquence de l'exposition du plasma confiné à l'action du champ magnétique.

L'utilisation de cellules photovoltaïques pour transformer le rayonnement thermique d'un réacteur en électricité a été proposée, par exemple dans la demande de brevet français n°2 663 775, mais dans ce cas la température du réacteur doit être très élevée (1000°C) pour que la génération d'électricité soit efficace. Au contraire, dans le cas de l'invention, même avec une température beaucoup plus basse (T=30°C par exemple), on constate une génération efficace d'électricité.

L'hydrure, de préférence à l'état de poudre, est avantageusement maintenu par un support ferromagnétique en sorte que le champ magnétique soit canalisé vers lui.

L'invention permet de produire de l'énergie notamment sous forme d'un rayonnement, par exemple un rayonnement capable d'impressionner un détecteur de particules nucléaires, ou d'un courant ou d'énergie thermique à haut niveau de température, résultant de réactions nucléaires exothermiques.

On va maintenant décrire en détail trois exemples de mise en oeuvre de l'invention en référence aux figures du dessin joint sur lequel :
- la figure 1 est un schéma d'un premier dispositif de mise en oeuvre de l'invention, plus particulièrement orienté vers la gestion des déchets nucléaires ;
- la figure 2 est un schéma d'un deuxième dispositif de mise en oeuvre de l'invention, plus particulièrement orienté vers la production d'énergie à partir d'uranium 238 ;
- la figure 3 est un schéma d'un troisième dispositif de mise en oeuvre de l'invention, plus particulièrement orienté vers la valorisation des sources de chaleur à bas niveau thermique ;
- la figure 4 est un graphique montrant l'évolution avec le temps de l'activité gamma d'un échantillon d'uranium traité en vue de transmuter cet uranium en produit de masse atomique plus faible ;
- la figure 5 est un graphique montrant la production d'énergie d'un échantillon d'uranium traité en vue de produire de l'énergie, et
- la figure 6 est un graphique des tensions électriques relatives à une cellule photovoltaïque débitant pendant son exposition dans le réacteur.

### EXEMPLE I

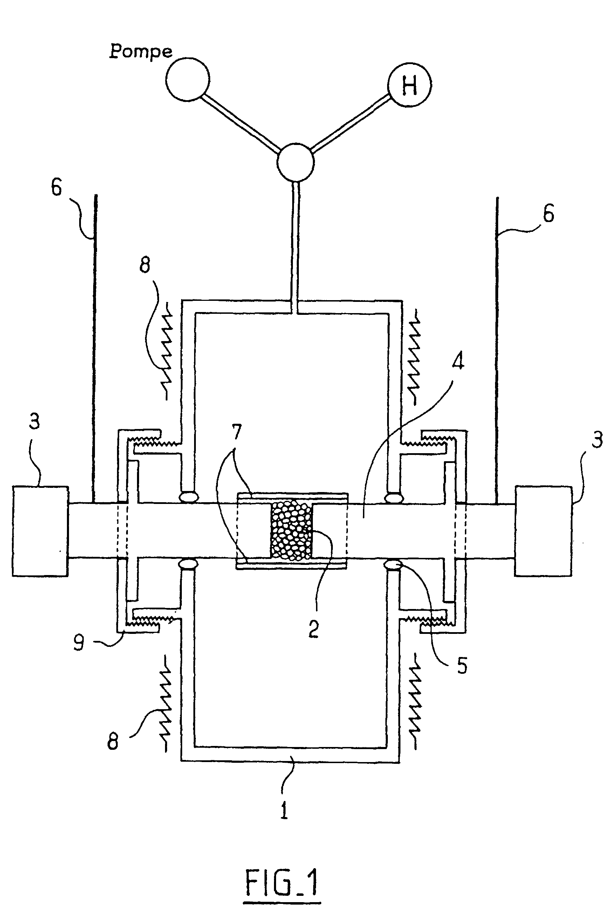

La figure 1 montre un dispositif pour la mise en oeuvre de l'invention, plus particulièrement orienté vers la transmutation des actinides et où la production d'énergie nucléaire est considérée comme secondaire. Il est constitué d'un réacteur (1), contenant des grains (2) d'uranium. Les grains (2) sont comprimés entre deux cylindres d'acier (4) qui traversent la paroi du réacteur par l'intermédiaire de joints toriques (5). La compression des grains est assurée par deux boulons percés (9), vissés sur le réacteur (1). Deux aimants permanents (3), qui sont mis en place après que le plasma d'hydrogène confiné ait été créé, permettent d'exposer ce plasma à un champ magnétique efficace, le flux magnétique créé étant guidé vers le plasma confiné par les cylindres (4).

Le flux magnétique des aimants se referme, à l'extérieur du réacteur (1) par l'intermédiaire d'un circuit ferromagnétique non représenté sur la figure pour des raisons de clarté. Un tube de silice (7) permet de maintenir en place les grains d'uranium puis la poudre résultant de la création du plasma confiné. Des conducteurs (6), reliés aux cylindres (4) permettent de créer un gradient de tension électrique à travers la poudre (2), ce gradient de tension électrique créant un mouvement d'ensemble du plasma confiné. Des résistances de chauffage (8) permettent, par l'intermédiaire d'un générateur électrique adapté et non représenté sur le graphique pour des raisons de clarté, de porter le réacteur à une température voulue. Le réacteur est relié par un raccord multiple à une pompe à vide et à un réservoir d'hydrogène, permettant de le remplir d'hydrogène à la pression voulue.

On va maintenant décrire deux séries d'expériences permettant de montrer tout l'intérêt de l'invention.Dans une première série d'expériences, les opérations suivantes sont effectuées :
**I/** On introduit 715 mg d'uranium pur en grain dans le réacteur (1) entre les cylindres (4). On crée le plasma d'hydrogène confiné en l'absence des aimants (3). Pour cela, on remplit le réacteur (1) d'hydrogène pur, à une pression de 15 bars et on chauffe le réacteur ainsi rempli à une température de 150°C, par l'intermédiaire des résistances de chauffage (8). Le réacteur (1) est est laissé sous ces conditions pendant une heure, la pression étant maintenue à 15 bars par l'intermédiaire du raccord multiple. Des essais préliminaires ont montré que ces conditions conduisent à un plasma d'hydrogène confiné où deux atomes d'hydrogène sont présente par atome d'uranium.
**II/** On laisse alors le réacteur (1) revenir à la température ambiante et on comprime la poudre confinant le plasma d'hydrogène par action sur les boulons (9).
**III/** On met en place les aimants (3).
**IV/** On place alors le réacteur face à un détecteur de photons gamma utilisant un cristal de germanium (Détecteur SEPh-ORTEC Germanium Planar 100 mm Fenêtre béryllium 25 µm). Le détecteur est réglé pour compter les photons d'énergie comprise entre 15 keV et 2 MeV.
**V/** On compte, sur une période de 24 heures, les photons gamma émis dans cette plage par les 715 mg d'uranium confinant le plasma d'hydrogène. On appelle C_{A}(n) le résultat de ce comptage à la date n.

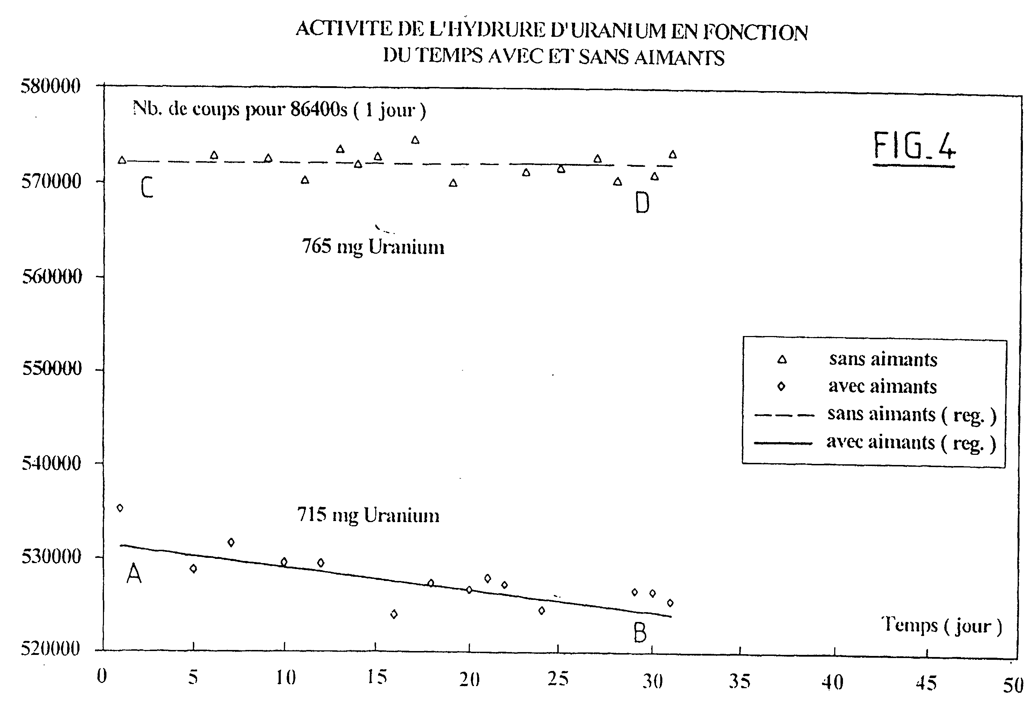

La figure 4 montre l'évolution de C_{A}(n) avec n, nombre de jour de l'expérience à partir de n = 1, qui est le jour où les aimants (3) ont été mis en place pour agir sur le plasma confiné. On voit que C_{A}(n) baisse régulièrement quand n augmente.

L'évolution moyenne de l'échantillon est caractérisée par la droite AB (droite des moindres carrés des points expérimentaux). On voit sur le graphique 4 que cette droite à une pente de -250 coups par jour, correspondant à une baisse d'activité de -250 coups par jour. Au bout de 30 jours d'exposition au champ magnétique, l'émission de photons de l'échantillon d'uranium est passé, en moyenne, de 531.000 coups par jour à 523.500 coups par jour, soit une diminution d'activité de 1.4% .

Dans une deuxième série d'expériences, on a introduit dans le réacteur (1) 765 mg d'uranium pur en grain. On effectue alors les mêmes opérations que pour la première série d'expériences, à l'exception de l'opération III (Mise en place des aimants (3)) et on compte les photons émis par les 765 mg d'uranium comme en V. On appelle C_{B}(n) le résultat de ce comptage à la date n.

La figure 4 montre l'évolution de C_{B}(n) avec n, nombre de jour de l'expérience à partir de n = 1, qui est le jour où le réacteur (1) a été placé en face du compteur de photons gamma (réglé comme pour la première série d'expériences). On voit que C_{B}(n) reste en moyenne à la même valeur, comme on peut le voir sur la droite CD (droite des moindres carrés des points expérimentaux), dont la pente est voisine de zéro.

On voit donc sur cet exemple, que l'activité de l'échantillon d'uranium confinant le plasma d'hydrogène n'a pas varié quand ce plasma n'a pas été exposé au champ magnétique, alors qu'au contraire, elle diminue régulièrement en cas d'exposition de celui-ci au champ magnétique. Dans les deux cas, le mouvement d'ensemble du plasma confiné est induit par les variations diurnes de température de la salle où l'expérience est réalisée. La différence entre les activités initiales C_{A}(1) et C_{B}(1) est banale et due à la différence des masses d'uranium mises en jeu dans les deux séries d'expériences.

L'ensemble de ces résultats peut s'interpréter comme provenant de la transmutation de l'uranium 238 en thorium 232.

On comprendra aisément que le procédé selon l'invention puisse s'appliquer aux isotopes à vie longue du plutonium qui résultent de la combustion de l'uranium dans les réacteurs à fissions. On obtiendra alors les isotopes correspondant de l'uranium qui sont soit utilisables soit plus faciles à stocker.

Cet exemple montre un autre avantage de l'invention. Dans la série d'expériences qui vient d'être exposée, le métal utilisé pour générer le plasma d'hydrogène est le corps chimique que l'on veut transmuter.

Dans les cas où le corps chimique à transmuter ne pourrait pas confiner efficacement le plasma d'hydrogène que l'on crée dans le procédé, on pourra utiliser un métal capable de créer ce plasma de façon efficace. Dans ce cas le corps chimique à transmuter sera introduit dans le métal confinant le plasma, soit sous forme de mélange chimique (alliage) soit sous forme de mélange physique (mélange de poudres).

L'effet avantageux d'un gradient de tension électrique a été montré dans une autre expérience. Le passage d'un courant électrique de 100 mA à travers un plasma d'hydrogène confiné dans la même quantité d'uranium que celle utilisée dans la première série d'expériences (715 mg) a permis d'obtenir une baisse d'activité de l'uranium de -550 coups par jour soit plus du double de celle obtenue sans gradient de tension électrique.

### EXEMPLE II

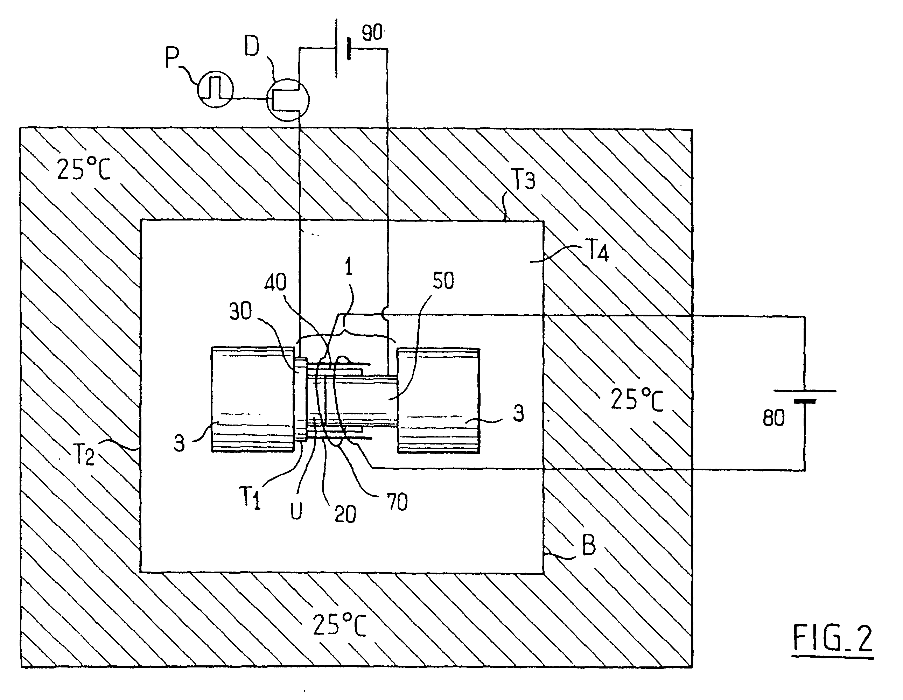

La figure 2 montre un dispositif pour la mise en oeuvre de l'invention, plus particulièrement orienté vers la production d'énergie à partir d'actinides et plus particulièrement à partir d'uranium naturel, contenant une forte proportion d'uranium 238.

Il est constitué d'un réacteur (1), placé dans une boîte d'aluminium étanche (B) et contenant de l'hydrure d'uranium. Celui-ci a été fabriqué auparavant, en soumettant pendant une heure, 825mg d'uranium 238 à une température de 150°C sous une pression de 15 bar d'hydrogène. Cette hydrogénation, réalisée dans un réacteur d'hydrogénation banal et non représenté sur la figure 2, a conduit à un plasma d'hydrogène confiné dans l'uranium, où deux atomes d'hydrogène sont présents par atome d'uranium.

Le réacteur (1) comprend un tube de cuivre (20), brasé sur un disque d'acier (30). Ce tube de cuivre est doublé d'un tube en téflon (40), permettant d'isoler électriquement le tube de cuivre. Un piston en acier (50) ferme le réacteur. Le réacteur (1) est équipé d'un capteur de température (T1).

Avant de fermer ce réacteur, on y introduit la poudre d'hydrure d'uranium précédemment synthétisé (cette opération est réalisée dans une boîte à gants sous atmosphère d'argon pour éviter l'oxydation de l'hydrure). L'hydrure est alors comprimé, entre le piston (50) et le disque (30), par l'action d'une presse sur le piston (50), conduisant à un disque d'hydrure d'uranium (U) confinant le plasma d'hydrogène.

On place alors le réacteur (1) entre deux aimants cylindriques (3) (samarium/cobalt, champ magnétique 1 T), un des aimants étant placé contre le disque d'acier (30) et l'autre contre le piston (50), de façon à ce que les pôles opposés soient de polarités magnétiques opposées. On créé ainsi un fort champ magnétique axial à travers le plasma d'hydrogène confiné dans le disque (U).

Une résistance de chauffage (70) est enroulée autour du tube de cuivre (20). Cette résistance, isolée électriquement du réacteur (1), est alimentée par un générateur de courant continu (80), équipé des moyens nécessaires (non représentés sur la figure) pour mesurer l'énergie électrique servant à chauffer le réacteur.

Par ailleurs, un générateur de courant continu (90) dont un des pôles est connecté au disque (30) et l'autre au piston (50), permet de faire passer un courant électrique continu pulsé à travers le plasma d'hydrogène confiné dans l'uranium. Ce courant continu pulsé est obtenu en agissant, par l'intermédiaire d'un générateur de fonction (P), sur un transistor (D) qui ouvre et ferme le circuit avec une fréquence que l'on peut contrôler par l'intermédiaire du générateur (P).

Le réacteur contenant le plasma confiné (U) est alors entouré d'une couche isolante de laine de verre et introduit dans la boîte (B) qui est fermée hermétiquement. Pour des raisons de simplicité, on n'a pas représenté sur la figure 2 les traversées électriques permettant d'alimenter la résistance de chauffage (70) et le réacteur (1). A l'aide d'une pompe à vide et d'une bouteille d'argon connectés sur un raccord multiple relié à la boîte (B) et non représentés sur la figure pour des raisons de simplicité, la boîte (B) est alors mise sous pression d'argon (1,2 bar absolu). La boîte (B), qui est équipée de trois capteurs de température (T2), (T3), et (T4) positionnés sur trois de ses faces, est alors placée dans une étuve dont la température peut être régulée.

La température de l'étuve est maintenue à 25°. On effectue alors les opérations suivantes :

### 1/ Calibration thermique du réacteur.

Pour réaliser cette opération on fait passer dans la résistance de chauffage (70) du réacteur des puissances électriques croissantes générées par le générateur (80) et on enregistre les températures T1 (réacteur) et T2, T3 et T4 (faces de la boîte) obtenues. On constate que, pour des puissances de chauffage variant de 0 à 15 W, la température T1 varie de 25 à 230° C environ et que les températures T2, T3 et T4 sont très voisines et varient de 25 à 45°C environ.

L'ensemble des mesures permet de modéliser le comportement thermique du réacteur dans la boîte par l'équation suivante (ET) :
Puissance électrique injectée P (W) = 0,001 x² + 0,0665^{x} + 0,0985.
x étant la différence entre la température T1 et la moyenne des températures T2, T3 et T4.

### 2/ Production d'énergie.

Pour déclencher cette production on fait passer dans le réacteur (1) des impulsions de courant continu, générées par le générateur (90) et d'une fréquence de 5000 Hz environ (réglée par le générateur de fonction (P). L'intensité moyenne du courant est de l'ordre de 8 à 10 A et la puissance moyenne injectée varie de 1 à 3 W. On maintient la température du réacteur (1) à la valeur souhaitée par l'intermédiaire du générateur (80) qui fournit la puissance de chauffage nécessaire, le générateur (90) servant essentiellement à créer dans le plasma d'hydrogène confiné (U) un mouvement d'ensemble des protons et des électrons d'une direction parallèle à celle du champ magnétique créé par les aimants.

On enregistre la puissance électrique totale fournie au réacteur (1) somme de la puissance délivrée par les générateurs (80) et (90) ainsi que les températures T1, T2, T3 et T4.

### 3/ Bilan énergétique.

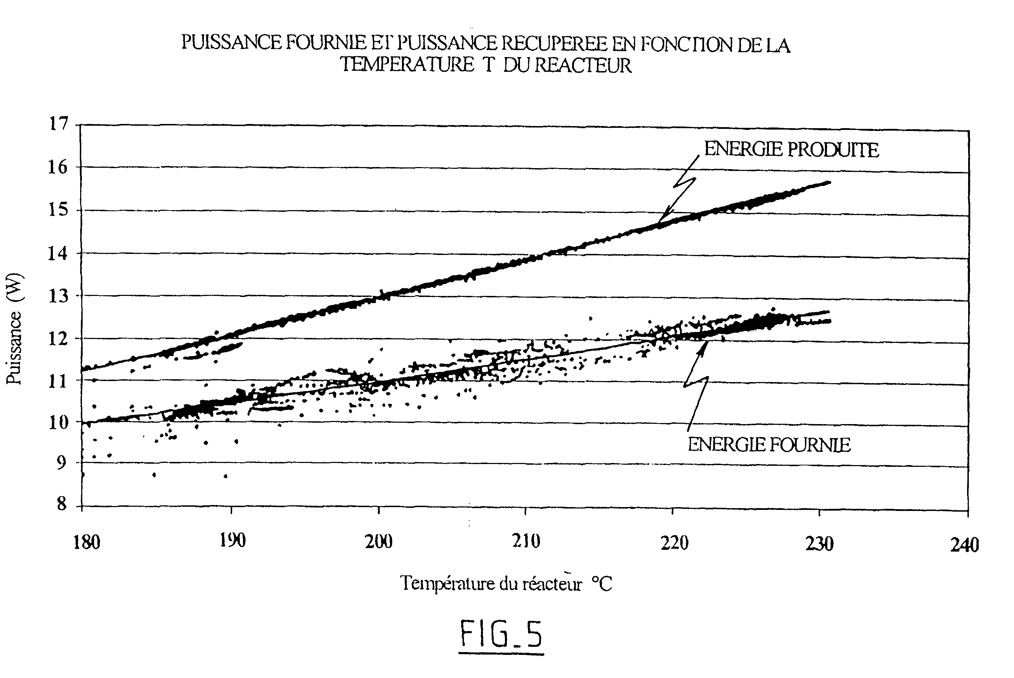

Le bilan énergétique de la production d'énergie est résumé sur la figure 5. La courbe « énergie produite » est donnée par l'équation (ET). C'est la puissance qui doit être fournie au réacteur pour maintenir sa température à la valeur indiquée en abscisse. La courbe « énergie fournie » résulte de la mesure de l'énergie électrique fournie au réacteur pour maintenir sa température à la valeur indiquée en abscisse. On voit immédiatement sur la figure 5, que pendant la phase de production d'énergie on a fourni au réacteur une puissance inférieure à celle nécessaire pour maintenir sa température à la valeur observée. Le réacteur a donc produit de l'énergie par l'action de l'hydrex sur les noyaux d'uranium.

### 4/ Efficacité de la production d'énergie.

On voit sur la figure 5 que la puissance fournie augmente avec la température du réacteur. Il est donc plus facile de fournir de l'énergie à haute température qu'à basse température, ce qui est un premier avantage.

Un deuxième avantage résulte du fait que l'énergie de chauffage ne sera pas nécessaire dans une installation industrielle. Pour chiffrer cet avantage, on a calculé l'énergie totale produite pendant la phase de production d'énergie (qui a duré plus de 25 jours) et on l'a comparée à l'énergie fournie par le générateur (80). On trouve 4,4 millions de Joule à comparer à 1,8 millions de Joule.

Un troisième avantage vient du fait que l'on utilise comme combustible de l'uranium 238 qui est très abondant. On pourrait aussi utiliser du thorium 232 qui est également très abondant.

### EXEMPLE III

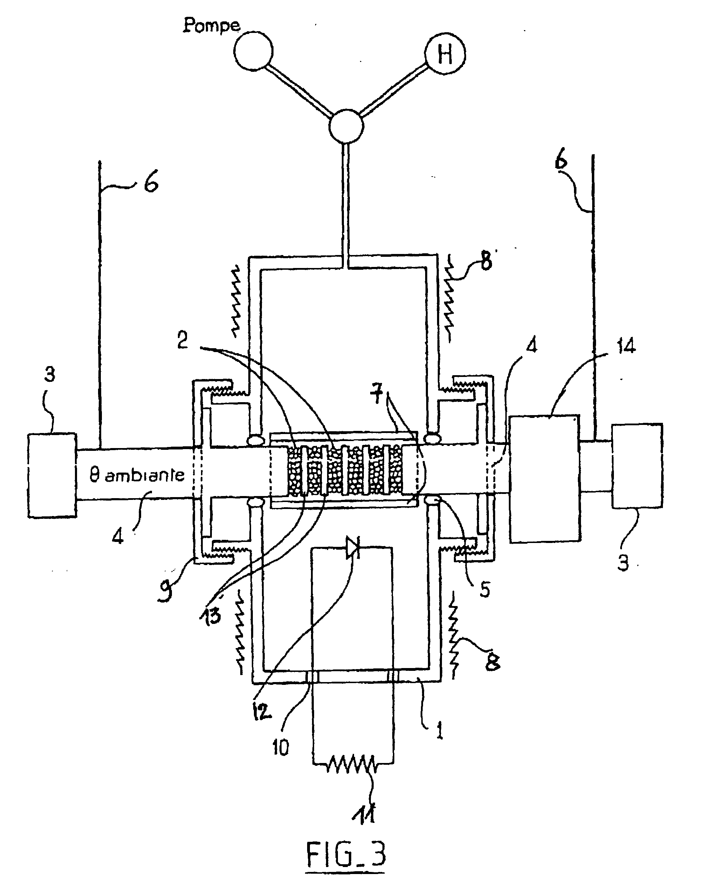

La figure 3 montre un dispositif pour la mise en oeuvre de l'invention, plus particulièrement orienté vers la valorisation d'énergie thermique à bas niveau de température.

Il est constitué d'un réacteur (1), contenant une poudre (2) de titane placée entre deux aimants permanents (3). La poudre (2) est comprimée entre deux cylindres d'acier (4) qui traversent la paroi du réacteur par l'intermédiaire de joints toriques (5) et qui concentrent le flux magnétique sur la poudre. La compression de la poudre est assurée par deux boulons percés (9), vissés sur le réacteur (1). Les cylindres (4) servant aussi à transférer de la chaleur à basse température vers la poudre, depuis un réservoir (14) à température T, créant ainsi un gradient de température entre T et la température ambiante θ. Le sens de ce gradient est déterminé par le fait que T est supérieur à θ, et sa direction moyenne est parallèle à celle du champ magnétique. Des lamelles d'acier (13), placées dans la poudre (2) permettent de maintenir un champ magnétique élevé dans la masse de la poudre. Des résistances de chauffage (8) permettent, par l'intermédiaire d'un générateur électrique adapté et non représenté sur le graphique pour des raisons de clarté, de porter le réacteur à la température voulue. Des cellules photovoltaïques (12) permettent de transformer en électricité le rayonnement émis comme conséquence de l'action combinée du champ magnétique et du gradient thermique sur les protons et les électrons de l'hydrure. L'énergie électrique ainsi produite peut être utilisée dans un circuit (11) extérieur au réacteur et connecté aux cellules photovoltaïques (12) par l'intermédiaire de traversées électriquement isolantes (10).Le réacteur est relié par un raccord multiple à une pompe à vide et à un réservoir d'hydrogène, permettant de le remplir d'hydrogène à la pression voulue.

On va maintenant décrire une expérience montrant l'intérêt de l'invention dans le domaine de la récupération d'énergie thermique à bas niveau de température.

Cinq grammes environ de Titane en poudre (300 µm) sont placés. dans le réacteur (1) entre les cylindres (4). Le diamètre des cylindres est de 8mm. La poudre est séparée en cinq portions à peu prés égale par quatre lamelles en acier de 8mm de diamètre et de 2mm d'épaisseur disposées perpendiculairement à la direction du champ magnétique appliqué. La cellule photovoltaïque (12) a une surface totale de 10cm² et est constituée de 4 morceaux de 2,5cm par 1cm, disposés autour d'un tube de silice dont le diamètre externe est de 11mm [les supports des cellules, constitués de deux fines plaques métalliques, perpendiculaires au tube de silice et prenant appui sur lui à ses deux extrémités, ne sont pas représentées sur la figure pour des raisons de clarté]. Les cellules sont reliées électriquement entre elles en parallèle et l'ensemble est relié électriquement, par l'intermédiaire de traversées isolantes (10) à une résistance (11) de 450hms. Le réacteur est étanche à la lumière et aucune différence de potentiel ne peut être détectée aux bornes de la résistance (11) quand celle-ci est connectée à la cellule photovoltaïque, après fermeture du réacteur.

On réalise alors deux séries d'expériences, chaque série partant du réacteur chargé en titane neuf comme décrit ci-dessus et non équipé des aimants (3).

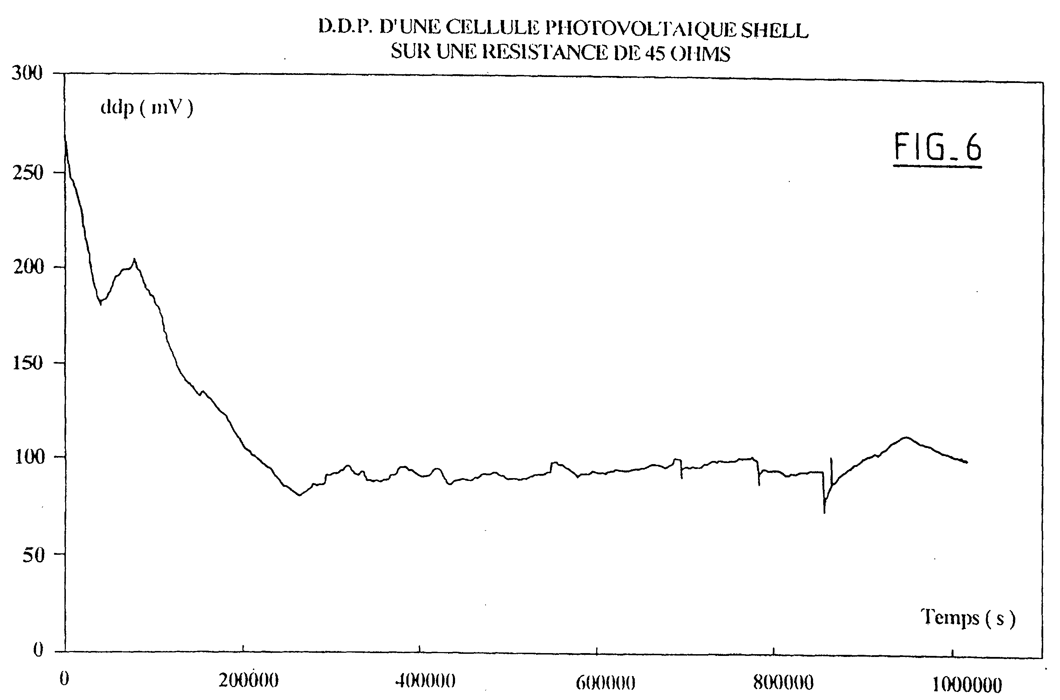

Dans la première série d'expériences, les opérations suivantes sont réalisées :
**I/** On met en place les aimants (3).
**II/** On créé le plasma confiné dans le réseau du titane. Pour cela, on remplit le réacteur (1) d'hydrogène pur à 15 bars et l'on chauffe le réacteur ainsi rempli à une température de 200°C au moyen des résistances de chauffage (8). Le réacteur est laissé sous ces conditions pendant 5h. Des expériences préliminaires ont montré que l'on obtient dans ces conditions un plasma d'hydrogène confiné dans le titane et contenant 0,4 atome d'hydrogène par atome de titane.
**III/** On laisse le réacteur revenir à la température ambiante.
**IV/** On connecte les cellules photovoltaïques à la résistance (11) et l'on enregistre la différence de potentiel aux bornes de cette résistance. La figure 6 donne l'évolution de cette différence de potentiel avec le temps. Partant de 250 mV, cette valeur se stabilise à 100 mV au bout de 200.000 secondes. La cellule photovoltaïque a ainsi débité pendant 8.000.000 de secondes, temps au bout duquel la différence de potentiel est revenue à une valeur non mesurable.

Dans la deuxième série d'expériences, on part d'un réacteur (1) équipé comme pour la première série et l'on réalise les opérations II, III et IV mais on ne réalise pas l'opération I (mise en place des aimants). On ne constate alors aucune différence de potentiel mesurable aux bornes de la résistance (11) après l'opération IV quand la résistance est connectée aux cellules photovoltaïques.

On a donc, dans la première série d'expérience, transformé de l'énergie thermique à bas niveau de température (température ambiante) en énergie électrique avec une puissance moyenne 0,2 mW.

L'invention n'est pas limitée à ces exemples de réalisation.

## Revendications

1. Procédé pour produire de l'énergie, dans lequel on expose à l'action d'un champ magnétique un plasma de protons et d'électrons confiné dans les sites interstitiels d'un hydrure à caractère métallique, **caractérisé en ce qu'**on créé dans l'hydrure un mouvement d'ensemble des protons et des électrons du plasma dans une direction parallèle à celle dudit champ magnétique, favorisant ainsi les collisions entre ces particules, leurs spins ayant des directions parallèles, ledit mouvement d'ensemble etant créé en réalisant dans le plasma, un ou plusieurs gradients choisis dans le groupe constitué par un gradient de concentration en hydrogéna dont la direction est parallèle à celle du champ magnétique, un gradient de température dont la direction est parallèle à celle du champ magnétique, un gradient de tension électrique dont la direction est parallèle à celle du champ magnétique.

2. Procédé selon la revendication 1, dans lequel un corps qui n'est pas un métal donnant un hydrure à caractère métallique est mélangé chimiquement ou physiquement à l'hydrure.

3. Procédé selon la revendication 2 où ledit corps est choisi dans le groupe constitué par le lithium et le béryllium.

4. Procédé selon l'une des revendications précédentes, dans lequel l'hydrure est sous forme de poudre.

5. Procédé selon l'une des revendications précédentes, où des lamelles d'un matériau ferromagnétique sont disposées au sein de l'hydrure, perpendiculairement à la direction du champ magnétique appliqué.

6. Procédé selon l'une des revendications précédentes, dans lequel on utilise des aimants permanents pour créer le champ magnétique.

7. Procédé selon l'une des revendications 1 à 6, dans lequel on créé l'hydrure in-situ en soumettant un métal susceptible de former une hydrure à caractère métallique à une atmosphère d'hydrogène, sous une pression et à une température appropriées.

8. Dispositif pour la mise en oeuvre d'un procédé selon l'une des revendications 1 à 7, qui comprend un réacteur (1), des moyens pour supporter dans le réacteur un hydrure à caractère métallique confinant un plasma de protons et d'électrons (U) et des moyens (3) pour créer un champ magnétique agissant sur ce plasma confiné, **caractérisé en ce qu'**il comporte des moyens (6 ; 14 ; 90, P, D) pour créer, un mouvement d'ensemble des protons et des électrons du plasma, selon une direction parallèle à celle du champ magnétique, lesdits moyens pour créer ledit mouvement d'ensemble des protons et des électrons du plasma étant choisis parmi des moyens (6) aptes à créer dans le plasma un gradient de tension électrique, des moyens (14 ; 90,P,D) aptes à créer dans le plasma un gradient de température, et des moyens aptes à créer dans le plasma un gradient de concentration en hydrogène, le ou les gradients choisis étant parallèles à la direction du champ magnétique.

9. Dispositif selon la revendication 8 dont les moyens (3) pour créer un champ magnétique apte à agir sur ledit plasma sont des aimants permanents.

10. Dispositif selon l'une des revendications 8 et 9, et dont le réacteur est équipé de cellules photovoltaïques (12).

11. Dispositif selon l'une des revendications 8 à 10, où l'hydrure est pincé sur les plaques (13) d'un échangeur à plaques constituées d'un matériau ferromagnétique.

12. Dispositif selon les revendications 10 et 11, dont les cellules photovoltaïques (12) sont disposées parallèlement aux plaques de l'échangeur à plaques.

13. Dispositif selon l'une des revendications 9 à 12, et qui comporte des moyens (H) pour produire l'hydrure dans le réacteur en soumettant un métal susceptible de fournir un hydrure à caractère métallique à une atmosphère d'hydrogène, sous une pression et à une température appropriées.

14. Dispositif selon la revendication 8 ou 9 dans lequel les moyens pour créer ledit mouvement d'ensemble des protons et des électrons dans l'hydrure comprennent un générateur de courant continu (90) relié par un circuit à l'hydrure et qui lui applique un courant électrique pulsé obtenu en agissant par l'intermédiaire d'un générateur de fonction (P) sur un transistor (D) qui ouvre et ferme le circuit.

15. Dispositif selon la revendication 8 ou 9 dans lequel l'hydrure métallique est comprimé entre un piston en acier (50) et un disque en acier (30) ou entre deux pistons (4) et confiné latéralement par un tube (11 ; 40), le piston et le disque ou les pistons coopérant avec des aimants pour guider vers l'hydrure l'action de deux aimants (3).

## Patentansprüche

1. Verfahren zur Energieerzeugung, bei dem man ein Plasma von Protonen und Elektronen, das in die Zwischengitterplätze eines Hydrids von metallischem Charakter eingeschlossen ist, der Wirkung eines Magnetfelds aussetzt, **dadurch gekennzeichnet, dass** man in dem Hydrid eine Gesamtbewegung der Protonen und der Elektronen des Plasmas in einer Richtung parallel zu jener des Magnetfelds erzeugt, wodurch die Kollisionen zwischen diesen Teilchen begünstigt werden, wobei deren Spins parallele Richtungen aufweisen, wobei die Gesamtbewegung erzeugt wird, indem in dem Plasma ein oder mehrere Gradienten, ausgewählt aus der Gruppe gebildet aus einem Wasserstoffkonzentrationsgradienten, dessen Richtung parallel zu jener des Magnetfelds ist, einem Temperaturgradienten, dessen Richtung parallel zu jener des Magnetfelds ist, einem Gradienten von elektrischer Spannung, dessen Richtung parallel zu jener des Magnetfelds ist, erzeugt wird bzw. werden.

2. Verfahren nach Anspruch 1, bei dem eine Substanz, die kein Metall, das ein Hydrid von metallischem Charakter liefert, ist, chemisch oder physikalisch mit dem Hydrid gemischt wird.

3. Verfahren nach Anspruch 2, wobei die Substanz aus der Gruppe, die aus Lithium und Beryllium gebildet wird, ausgewählt wird.

4. Verfahren nach einem der vorangegangenen Ansprüche, bei dem das Hydrid in Pulverform vorliegt.

5. Verfahren nach einem der vorangegangenen Ansprüche, bei dem Lamellen eines ferromagnetischen Materials innerhalb des Hydrids senkrecht zu der Richtung des angelegten Magnetfelds angeordnet sind.

6. Verfahren nach einem der vorangegangenen Ansprüche, bei dem man Permanentmagneten verwendet, um das Magnetfeld zu erzeugen.

7. Verfahren nach einem der Ansprüche 1 bis 6, bei dem man das Hydrid in situ erzeugt, indem man ein Metall, das in der Lage ist, ein Hydrid von metallischem Charakter zu bilden, einer Wasserstoffatmosphäre unter einem geeigneten Druck und bei einer geeigneten Temperatur aussetzt.

8. Vorrichtung zum Ausführen eines Verfahrens nach einem der Ansprüche 1 bis 7, die einen Reaktor (1), Mittel, um in dem Reaktor ein Hydrid von metallischem Charakter, welches ein Plasma von Protonen und Elektronen (U) einschließt, zu tragen, und Mittel (3), um ein Magnetfeld zu erzeugen, das auf dieses eingeschlossene Plasma einwirkt, umfasst, **dadurch gekennzeichnet, dass** sie Mittel (6; 14; 90; P, D) umfasst, um eine Gesamtbewegung der Protonen und der Elektronen des Plasmas entlang einer Richtung parallel zu jener des Magnetfelds zu erzeugen, wobei die Mittel, um die Gesamtbewegung der Protonen und der Elektronen des Plasmas zu erzeugen, unter Mitteln (6), die dazu geeignet sind, in dem Plasma einen Gradient von elektrischer Spannung zu erzeugen, Mitteln (14; 90,P,D), die dazu geeignet sind, in dem Plasma einen Temperaturgradient zu erzeugen, und Mitteln, die dazu geeignet sind, in dem Plasma einen Wasserstoffkonzentrationsgradient zu erzeugen, ausgewählt sind, wobei der oder die ausgewählten Gradienten parallel zu der Richtung des Magnetfelds verläuft bzw. verlaufen.

9. Vorrichtung nach Anspruch 8, deren Mittel (3), um ein Magnetfeld, das dazu geeignet ist, um auf das Plasma einzuwirken, zu erzeugen, Permanentmagneten sind.

10. Vorrichtung nach einem der Ansprüche 8 und 9 und deren Reaktor mit Sperrschichtphotozellen (12) ausgestattet ist.

11. Vorrichtung nach einem der Ansprüche 8 bis 10, worin das Hydrid sich auf den Platten (13) eines Plattenwärmeaustauschers, die aus einem ferromagnetischen Material gebildet werden, befindet.

12. Vorrichtung nach den Ansprüchen 10 und 11, deren Sperrschichtphotozellen (12) parallel zu den Platten des Plattenwärmeaustauschers angeordnet sind.

13. Vorrichtung nach einem der Ansprüche 9 bis 12 und die Mit tel (H) umfasst, um das Hydrid in dem Reaktor zu produzieren, indem ein Metall, das in der Lage ist, ein Hydrid von metallischem Charakter zu liefern, einer Wasserstoffatmosphäre unter einem geeigneten Druck und bei einer geeigneten Temperatur unterworfen wird.

14. Vorrichtung nach Anspruch 8 oder 9, in der die Mittel, un die Gesamtbewegung der Protonen und der Elektronen in dem Hydrid zu erzeugen, einen Gleichstromgenerator (90) umfassen, der durch einen Stromkreis mit dem Hydrid verbunden ist und der an dieses einen gepulsten elektrischen Strom anlegt, der erhalten wird, indem er durch das Zwischenglied eines Funktionsgenerators (P) auf einen Transistor (D), der den Stromkreis öffnet und schließt, einwirkt.

15. Vorrichtung nach Anspruch 8 oder 9, in der das Metallhydrid zwischen einem Stahlkolben (50) und einer Stahlscheibe (30) oder zwischen zwei Kolben (4) verdichtet und seitlich durch ein Rohr (11; 40) eingeschlossen wird, wobei der Kolben und die Scheibe oder die Kolben mit Magneten zusammenwirken, um die Wirkung von zwei Magneten (3) in Richtung des Hydrids zu leiten.

## Claims

1. Process for producing energy, in which a plasma of protons and electrons confined in the interstitial sites of a hydride having a metallic nature is exposed to the action of a magnet field, **characterized in that** a general displacement of the protons and electrons of the plasma is created in the hydride in a direction parallel to that of the said magnetic field, thus favouring the collisions between these particles, their spins having parallel directions, the said general movement being created by producing one or more gradients in the plasma, these being chosen from the group consisting of a hydrogen concentration gradient whose direction is parallel to that of the magnetic field, a temperature gradient whose direction is parallel to that of the magnetic field and an electrical voltage gradient whose direction is parallel to that of the magnetic field.

2. Process according to Claim 1, wherein a substance which is not a metal giving a hydride having a metallic nature is chemically or physically mixed with the hydride.

3. Process according to Claim 2 where the said substance is chosen from the group consisting of lithium and beryllium.

4. Process according to one of the preceding claims, wherein the hydride is in powder form.

5. Process according to one of the preceding claims, where small plates of a ferromagnetic material are placed within the hydride, at right angles to the direction of the applied magnetic field.

6. Process according to one of the preceding claims, wherein permanent magnets are used to create the magnetic field.

7. Process according to one of Claims 1 to 6, wherein the hydride is created *in situ* by exposing a metal capable of forming a hydride having a metallic nature to a hydrogen atmosphere at a suitable pressure and at a suitable temperature.

8. Apparatus for implementing a process according to one of Claims 1 to 7, which comprises a reactor (1), means for supporting, in the reactor, a hydride having a metallic nature which confines a plasma of protons and electrons (U) and means (3) for creating a magnetic field which acts on this confined plasma, **characterized in that** it includes means (6; 14; 90, P, D) for creating a general displacement of the protons and electrons of the plasma in a direction parallel to that of the magnetic field, the said means for creating the said general displacement of the protons and electrons of the plasma being chosen from among means (6) capable of creating an electrical voltage gradient in the plasma, means (14; 90, P, D) capable of creating a temperature gradient in the plasma and means capable of creating a hydrogen concentration gradient in the plasma, the gradient or gradients chosen being parallel to the direction of the magnetic field.

9. Apparatus according to Claim 8, in which the means (3) for creating a magnetic field capable of acting on the said plasma are permanent magnets.

10. Apparatus according to either of claims 8 and 9, and the reactor of which is equipped with photovoltaic cells.

11. Apparatus according to Claims 8 to 10, where the hydride is placed on the plates (13) of a plate exchanger, the plates consisting of a ferromagnetic material.

12. Apparatus according to Claims 10 and 11, the photovoltaic cells (12) of which are placed parallel to the plates of the plate exchanger.

13. Apparatus according to one of Claims 9 to 12, and which includes means (H) for producing the hydride in the reactor by exposing a metal capable of providing a hydride having a metallic nature to a hydrogen atmosphere, at a suitable pressure and at a suitable temperature.

14. Apparatus according to Claim 8 or 9, wherein the means for creating the said general displacement of the protons and electrons in the hydride comprise a DC current generator (90) connected by a circuit to the hydride and which applies to it a pulsed electric current obtained by acting via a function generator (P) on a transistor (D) which opens and closes the circuit.

15. Apparatus according to Claim 8 or 9, wherein the metal hydride is compressed between a steel piston (50) and a steel disc (30) or between two pistons (4) and is confined laterally by a tube (11; 40), the piston and the disc or the pistons cooperating with magnets for guiding the action of two magnets (3) towards the hydride.
